# EUROPÄISCHE PATENTSCHRIFT

(11) **EP 3 884 179 B1**
(45) Veröffentlichungstag und Bekanntmachung des Hinweises auf die Patenterteilung: **16.10.2024**
(21) Anmeldenummer: 19808582.1
(22) Anmeldetag: 21.11.2019
(51) Int. Cl.: F16D 3/38

(54) **KREUZGELENK FÜR EINE LENKWELLE EINES KRAFTFAHRZEUGS**
UNIVERSAL JOINT FOR A STEERING SHAFT OF A MOTOR VEHICLE
JOINT UNIVERSEL POUR ARBRE DE DIRECTION DE VÉHICULE AUTOMOBILE

(30) Priorität: 23.11.2018 DE 102018220180
(43) Veröffentlichungstag der Anmeldung: 29.09.2021
(73) Patentinhaber: thyssenkrupp Presta AG, 9492 Eschen (LI); thyssenkrupp AG, 45143 Essen (DE)
(72) Erfinder: EISWIRTH, Maximilian, 6850 Dornbirn (AT); FRICK, Stefan, 6832 Sulz (AT)
(74) Vertreter: thyssenkrupp Intellectual Property GmbH
(86) Internationale Anmeldenummer: PCT/EP2019/082141
(87) Internationale Veröffentlichungsnummer: WO 2020/104615

(56) Entgegenhaltungen:
- EP-A1- 1 001 182
- EP-A1- 1 001 182
- DE-A1- 4 439 998
- DE-A1- 4 439 998
- GB-A- 2 168 782
- GB-A- 2 168 782
- US-A1- 2006 293 107
- US-A1- 2006 293 107

## Beschreibung

### Stand der Technik

Die Erfindung betrifft ein Kreuzgelenk für eine Lenkwelle eines Kraftfahrzeugs, umfassend ein Gelenkkreuz mit zwei rechtwinklig zueinander angeordneten Paaren von Zapfen und zwei mit der Lenkwelle verbindbaren Gelenkgabeln mit jeweils zwei einander gegenüberliegenden Armen, in denen jeweils ein Zapfen um eine Zapfenachse drehbar in einem Zapfenlager gelagert ist, welches eine in dem Arm festgelegte, topfförmig ausgebildete Außenbüchse aufweist, die stirnseitig von einem Außentopfboden verschlossen ist, welcher der Stirnseite des Zapfens gegenüberliegt, wobei zwischen dem Zapfen und der Außenbüchse abrollbare Wälzkörper angeordnet sind, wobei auf dem Zapfen eine Innenbüchse festgelegt ist, wobei die Wälzkörper zwischen der Innenbüchse und der Außenbüchse in einem als Wälzkörperlaufbahn ausgebildeten Bereich angeordnet sind, und wobei auf der Stirnseite eines Zapfens ein konvex vorstehender Kontaktbereich angeordnet ist, der den Außentopfboden kontaktiert.

In einem Kraftfahrzeug dient die Lenkwelle zur Übertragung des in das Lenkrad eingebrachten Lenkmoments über die Lenkspindel und die Zwischenwelle in das Lenkgetriebe. Zum Ausgleich von Winkelversatz sind im Verlauf der Lenkwelle mindestens ein, üblicherweise zwei Kreuzgelenke eingegliedert, üblicherweise zwischen Lenkspindel und Zwischenwelle sowie zwischen Zwischenwelle und Lenkgetriebe.

Im Grundaufbau weist jedes Gelenk zwei jeweils an einem Wellenende angebrachte Gelenkgabeln auf, welche jeweils zwei in Wellenrichtung erstreckte, einander quer zur Wellenachse gegenüberliegende Arme haben. Ein Gelenkkreuz weist zwei Paare von entgegengesetzt radial vorstehenden Gelenkzapfen, kurz als Zapfen bezeichnet, auf, die auf rechtwinklig gekreuzten Zapfenachsen angeordnet sind. Die beiden Zapfen eines Paars sind jeweils in einem Arm einer Gelenkgabel in einem Zapfenlager drehbar um ihre Zapfenachse gelagert, die sich quer zur Wellenachse durch die Arme erstreckt. Die Zapfenlager sind als Radialwälzlager ausgebildet, üblicherweise als Radialnadellager.

Das Gelenkkreuz weist einen Grundkörper auf, der zur sicheren Aufnahme der hohen auftretenden Kräfte vorzugsweise als Stahl-Kaltpressteil oder aus einem anderen hochfesten Material ausgebildet ist, wie im Stand der Technik beispielsweise in der DE 10 2014 116 271 A1 beschrieben. Darin wird für die Radiallager vorgeschlagen, dass die Nadeln zwischen Wälzkörperlaufbahnen abrollen, die außen unmittelbar auf dem Zapfen des Grundkörpers und innen in einer mit dem Arm verbundenen Außenbüchse ausgebildet sind. Die Außenbüchse ist topfförmig als Außentopf ausgebildet, der in einem Arm festgelegt ist und in den der Zapfen eintaucht, so dass er mit seiner Stirnseite dem Boden der Außenbüchse, dem Außentopfboden, gegenüberliegt.

Um im Betrieb einen möglichst spielfreien Lauf und eine möglichst hohe Steifigkeit der Gelenkanordnung zu realisieren, wird in der genannten DE 10 2014 116 271 A1 vorgeschlagen, die Lagerung axial vorzuspannen. Dies wird dadurch erreicht, dass der Zapfen eine konvexe Stirnseite aufweist, die unter elastischer Vorspannung in einem Kontaktbereich gleitend an dem Außentopfboden der Außenbüchse anliegt. Durch eine elastische Verformung des Au-ßentopfbodens in axialer Richtung der Zapfenachse nach außen wird durch die Außenbüchse dauerhaft eine elastische Vorspannkraft auf das Zapfenpaar ausgeübt.

Durch die axiale Vorspannung kann die Steifigkeit in vorteilhafter Weise wirksam erhöht werden. Allerdings ist eine hochpräzise Bearbeitung der Zapfen im Bereich der Wälzkörperlaufbahnen erforderlich, was aufwendig ist. Außerdem wird durch die konvexe Stirnseite der für die Wälzlagerlaufbahn zur Verfügung stehende axiale Bereich des Zapfens verkürzt, also die Breite der Wälzkörperlaufbahn verringert, wodurch die zulässige Lagerbelastung des Zapfenlagers begrenzt wird. Um die zulässige Lagerbelastung zu erhöhen, könnte der Zapfen zwar in axialer Richtung verlängert werden. Die prinzipiell mögliche Verlängerung der Zapfen ist jedoch durch den gegebenen Abstand der Arme der Gelenkgabel begrenzt, da das Einsetzen des Gelenkkreuzes in die Gelenkgabel durch eine zunehmende Länge der Zapfen erschwert oder unmöglich wird.

Eine ähnliche Gelenkanordnung ist in der DE 10 2009 016 169 B4 beschrieben, bei der axial zwischen der Stirnseite des Zapfens und dem Außentopfboden ein Zentrierelement elastisch verspannt ist. Dadurch wird ebenfalls der als Wälzkörperlaufbahn nutzbare axiale Bereich des Zapfens verkürzt und die Lagerbelastung begrenzt.

Ein Kreuzgelenk der eingangs genannten Art ist aus der EP 1 001 182 A1 oder der GB 2 168 782 A bekannt. Der Kontaktbereich ist dabei jeweils an einem separat mit dem Zapfen oder der Innenbüchse verbundenen Element ausgebildet, wodurch ein nachteilig hoher Aufwand entsteht. Die weiterhin aus der US 2006/293107 A1 und der DE 44 39 998 A1 bekannten Gelenkanordnungen weisen keine Innenbüchse auf.

Angesichts der vorangehend erläuterten Problematik ist es eine Aufgabe der vorliegenden Erfindung, eine Gelenkanordnung zur mit geringerem Aufwand zur Verfügung zu stellen.

### Darstellung der Erfindung

Diese Aufgabe wird erfindungsgemäß gelöst durch ein Kreuzgelenk mit den Merkmalen des Anspruchs 1. Vorteilhafte Weiterbildungen ergeben sich aus den Unteransprüchen.

Erfindungsgemäß wird für ein Kreuzgelenk für eine Lenkwelle eines Kraftfahrzeugs, umfassend ein Gelenkkreuz mit zwei rechtwinklig zueinander angeordneten Paaren von Zapfen und zwei mit der Lenkwelle verbindbaren Gelenkgabeln mit jeweils zwei einander gegenüberliegenden Armen, in denen jeweils ein Zapfen um eine Zapfenachse drehbar in einem Zapfenlager gelagert ist, welches eine in dem Arm festgelegte, topfförmig ausgebildete Au-ßenbüchse aufweist, die stirnseitig von einem Außentopfboden verschlossen ist, welcher der Stirnseite des Zapfens gegenüberliegt, wobei zwischen dem Zapfen und der Außenbüchse abrollbare Wälzkörper angeordnet sind, wobei auf dem Zapfen eine Innenbüchse festgelegt ist, wobei die Wälzkörper zwischen der Innenbüchse und der Außenbüchse in einem als Wälzkörperlaufbahn ausgebildeten Bereich angeordnet sind, und wobei auf der Stirnseite eines Zapfens ein konvex vorstehender Kontaktbereich angeordnet ist, der den Außentopfboden kontaktiert, vorgeschlagen, dass der Kontaktbereich einstückig an den Zapfen oder an der Innenbüchse ausgebildet ist und relativ zur Wälzkörperlaufbahn der Innenbüchse stirnseitig axial vorsteht.

Bevorzugt kontaktiert der konvex vorstehende Kontaktbereich des Zapfens die Innenbüchse, besonders bevorzugt den Boden der Innenbüchse.

Die Außenbüchse ist, wie dies an sich bekannt ist, als Außentopf ausgebildet, bei dem eine hohlzylindrisch rohrförmige Außenhülse stirnseitig von einem Außentopfboden verschlossen ist.

Die Innenbüchse weist eine hohlzylindrische, rohrförmige Hülse auf, die Innenhülse, welche vorzugsweise unlösbar koaxial auf dem Zapfen befestigt ist, beispielsweise durch Aufpressen, wodurch eine feste und starre kraftschlüssige Verbindung erzeugt wird. Die Verbindung kann zusätzlich oder alternativ stoffschlüssig gestaltet sein, beispielsweise durch Verkleben, und zusätzlich oder alternativ formschlüssig, beispielsweise durch eine Verstemmung der Hülse auf dem Zapfen, oder durch ineinander greifende Formschluss-Strukturen wie Rändelungen oder Aufrauhungen, die beim Aufpressen auch durch plastische Verformung unlösbar miteinander verbunden werden können. Dadurch, dass die Verbindung starr ist, wird die Innenbüchse radial und axial unbewegbar auf dem Zapfen fixiert und somit eindeutig positioniert.

Auf ihrer radialen Außenseite weist die Hülse eine äußere zylindrische Mantelfläche auf, die über ihre axiale Breite, in Richtung der Zapfenachse gemessen, als Wälzkörperlaufbahn nutzbar ist. Vorzugsweise kann die Innenbüchse aus Wälzlagerstahl gefertigt sein, und zumindest partiell im Bereich der Wälzkörperlaufbahn gehärtet und/oder mit einer Hartbeschichtung versehen sein, wodurch ein spielarmer, leichtgängiger und verschleißarmer Lauf des Wälzlagers gewährleistet ist.

Ein besonderer Vorteil resultiert daraus, dass der Kontaktbereich der erfindungsgemäßen Kombination der Innenbüchse mit dem Zapfen stirnseitig axial, d.h. von der Innenbüchse aus gesehen in Richtung der Zapfenachse, relativ zur Innenbüchse vorsteht. Dabei ragt der konvexe Kontaktbereich insbesondere über den als Wälzkörperlaufbahn ausgebildeten Bereich der Innenbüchse stirnseitig vor. Während im Stand der Technik der als Wälzkörperlaufbahn nutzbare Bereich am Zapfen durch die Umformung des Zapfens zur Ausbildung des konvexen Kontaktbereichs axial verkürzt wird, ist es durch die Erfindung möglich, auf einem derartigen Zapfen durch die Innenbüchse eine Wälzkörperlaufbahn mit einer größeren Breite in axialer Richtung zu realisieren, als dies durch eine unmittelbar auf dem Zapfen angeordnete Wälzkörperlaufbahn möglich wäre. Die Hülse der Innenbüchse, deren axiale Breite die maximale axiale Breite der Wälzköperlaufbahn bestimmt, kann eine größere Abmessung in Richtung der Zapfenachse haben, als der potentiell als Wälzkörperlaufbahn nutzbare zylindrische Außenumfang des Zapfens. Dabei kann sich die Hülse der Innenbüchse in axialer Richtung bis in den konvex zusammenlaufenden Bereich an der Stirnseite des Zapfens erstrecken, wobei die Kontaktfläche am axial äußersten Punkt in axialer Richtung über die Wälzkörperlaufbahn vorragt. Dadurch kann bei einer gegebenen Länge eines Zapfens mit stirnseitig konvexer Kontaktfläche eine höhere zulässige Lagerbelastung realisiert werden.

Es ist möglich, dass die Innenbüchse als rohrabschnittförmige, beidseitig axial offene Innenhülse ausgebildet ist, deren stirnseitiges Ende sich in einem konvexen Bereich des Zapfens befindet. Die auf der Stirnseite durch konvexe Umformung des Zapfens ausgebildete Kontaktfläche ragt dabei stirnseitig axial aus der Innenbüchse heraus vor und kontaktiert direkt oder über einen Spalt den Aussentopfboden. Auf diese Weise können die Vorteile eines Zapfens mit konvexer Stirnfläche mit den Vorteilen einer Innenbüchse kombiniert werden, wobei als zusätzlicher Synergieeffekt die Breite der Wälzkörperlaufbahn vergrößert werden kann, um eine höhere zulässige Lagerbelastung zu erzeugen.

Bevorzugt sind der Aussentopfboden und der konvex vorstehende Kontaktbereich des Zapfens durch einen Spalt beabstandet, wobei ein Kontakt zwischen Zapfen und Aussentopfboden zumindest temporär erfolgt.

Eine vorteilhafte Ausführung der Erfindung sieht vor, dass die Innenbüchse topfförmig als Innentopf ausgebildet ist mit einem stirnseitigen Innentopfboden, der den Kontaktbereich aufweist. Der Innentopf weist eine hohlzylindrische Hülse auf, die wie vorangehend beschrieben die Wälzkörperlaufbahn aufweist, und die stirnseitig durch den Innentopfboden geschlossen ist. Mit ihrer der Stirnseite abgewandten Öffnung, auch als Topföffnung bezeichnet, ist die der Innentopf axial auf den Zapfen aufgestülpt.

Bevorzugt treten der Aussentopfboden und der konvex vorstehende Kontaktbereich des Zapfens erst dann in direktem Kontakt, sobald die Innenbüchse in Richtung Aussenbüchse deformiert wird. Dadurch ergibt sich eine bessere radiale Abstützung sowie eine bessere Kraftübertragung.

Der Kontakt zwischen Zapfen und Aussentopfboden und/oder zwischen Zapfen und Innentopfboden und/oder zwischen Stirnseite des Innentopfbodens und Aussentopfboden kann vorzugsweise gleichzeitig erfolgen, sodass temporär ein Doppelkontakt vorliegen kann.

Der Kontaktbereich ist nicht wie im Stand der Technik am Grundkörper des Zapfens selbst, sondern an der auf dem Zapfen angebrachten Innenbüchse ausgebildet. Daraus ergibt sich der bereits vorangehend beschriebene Vorteil, dass die als Wälzkörperlaufbahn nutzbare axiale Breite vergrößert werden kann. Ein weiterer Vorteil ist, dass zur Gestaltung und funktionalen Optimierung des Kontaktbereichs erweiterte Möglichkeiten zur Verfügung stehen. Beispielsweise ist die Innenbüchse im Vergleich zu einem massiven Zapfen leichter form- und umformbar, beispielsweise durch eine Herstellung als dünnwandiges Stahlblechformteil, welches durch Pressen, Tiefziehen und andere bekannte Kalt- und Warmumformverfahren rationell und präzise hergestellt werden kann, wobei die lokale Wandstärke und individuell angepasste Formgebungen von Hülse und Topfboden mit großer Gestaltungsfreiheit vorgegeben werden können. Der Kontaktbereich kann beispielsweise durch eine plastische Einpressung des Innentopfbodens realisiert werden, was weniger Fertigungsaufwand erfordert als die Ausbildung einer konvexen Stirnseite eines massiven Zapfens.

Der Kontaktbereich ist zentral auf der Zapfenachse angeordnet und ist kleiner als der offene Innenquerschnitt der Innenbüchse, welcher im Wesentlichen mit dem Querschnitt des Zapfens korrespondiert.

Weiterhin kann die Materialauswahl unabhängig vom Material des Zapfens erfolgen. Wie vorangehend beschrieben kann im Bereich der Hülse beispielsweise eine partielle Härtung erfolgen zur Optimierung der Wälzkörperlaufbahn. Im Bereich des Topfbodens kann ebenfalls eine partielle Härtung, Oberflächengestaltung, Beschichtung oder dergleichen vorgesehen sein, um im Kontaktbereich die Gleitreibung im Kontakt mit der Außenbüchse zu vermindern. Dadurch kann der Kontaktbereich hinsichtlich seiner Form und seiner funktionalen Eigenschaften einfacher optimiert werden, als dies bei der Formgebung des Zapfens selbst möglich ist.

Außerdem ist es erstmals möglich, elastische Eigenschaften der Innenbüchse zu Vorspannung des Gelenkkreuzes in der Gelenkgabel zu realisieren, wie nachfolgend erläutert wird. Bevorzugt ist es möglich, dass der Kontaktbereich an dem Innentopf axial federnd ausgebildet ist. Der Kontaktbereich ist stirnseitig nach außen, d.h. in Richtung der Zapfenachse von dem Topfboden konvex vorstehend geformt. Durch eine angepasste Formgebung, Materialgestaltung und Wandstärke kann die Innenbüchse in sich axial elastisch ausgestaltet sein, so dass der am Topfboden angeordnete Kontaktbereich gegenüber der auf dem Zapfen befestigten Hülse bezüglich Druck auf die Stirnfläche relativ zum Zapfen gefedert ist. Im Unterschied zum Stand der Technik bildet die Innenbüchse selbst ein in Richtung der Zapfenachse wirksames Federelement, welches mit dem Zapfen verbunden ist und die verspannte Lagerung des Gelenkkreuzes zwischen den Armen der Gelenkgabel ermöglicht. Folglich hat erfindungsgemäß der Innentopf eine Mehrfach-Funktion, nämlich die Vergrößerung der Wälzkörperlaufbahn, als Träger des Kontaktbereichs und als Federelement zur elastischen Verspannung des Gelenkkreuzes in der Gelenkgabel.

Die axiale Elastizität der Innenbüchse kann dadurch erreicht werden, dass der Innentopfboden axial federnd mit der Hülse verbunden ist, beispielsweise durch eine plane Ausbildung oder eine umlaufende Sicke

Eine vorteilhafte Ausführung ist, dass der Kontaktbereich gebildet wird durch eine an dem Innentopfboden ausgebildete Kalotte. Dabei kann der Innentopfboden außerhalb des Kontaktbereichs zu mindestens 50%, bevorzugt zu 75% bis 80% eben, d.h. plan ausgebildet sein. Die konvexe Form wird durch die von der Stirnseite nach außen konvex vorstehende Kalotte bereitgestellt, die beispielsweise als kugelabschnittförmige Ausformung ausgebildet sein kann, die im Bereich der zentralen Kontaktfläche auch abgeflacht sein kann, oder kegelstumpfförmig geformt sein kann. Die Kalotte kann eine in den ansonsten planen, quer zur Zapfenachse im Wesentlichen ebenen Topfboden von innen eingebrachte plastische Einformung sein, die beispielsweise mittels Pressen erzeugt wird. Die Kalotte erstreckt sich zentral nur über einen Teilbereich des Topfbodens, und ist bevorzugt von dem außerhalb des Kontaktbereichs verbleibenden, planen ringförmigen Bereich des Topfbodens umgeben und gehalten. In sich ist die Kalotte relativ formsteif, wodurch in vorteilhafter Weise eine gleichbleibende definierte Größe der Kontaktfläche mit der Außenbüchse zur Verfügung gestellt wird. Der die Kalotte umgebende plane ringförmige Bereich kann ein Federelement bilden, welches eine elastische Verlagerung der Kalotte relativ zur Hülse zulässt, und damit die federnde Anordnung der Kontaktfläche relativ zum Zapfen erzeugt. Die Kalotte ist bevorzugt einstückig mit der Innenbüchse ausgebildet. Weiterhin ist es denkbar und möglich, dass die Kontaktfläche eine gewellte Struktur annimmt, um damit eine verbesserte Krafteinwirkung zu ermöglichen.

Die Federkonstante des Federelements kann durch die Materialstärke und das relative Verhältnis der Abmessungen von Kalotte und planem Bereich des Topfbodens vorgegeben werden. Zur Bereitstellung einer ausreichenden Elastizität ist es vorteilhaft, dass der Kontaktbereich zu mindestens 50% plan ausgebildet ist, bevorzugt zu 75% bis 80%, wodurch eine höhere Elastizität erzeugt werden kann.

Es ist ebenfalls denkbar, im Topfboden oder in der Hülse zusätzlich oder alternativ axial elastisch verformbare Bereiche vorzusehen, beispielsweise durch sicken- oder wellenförmige Einformungen, Materialverdünnungen oder dergleichen.

Es kann vorgesehen sein, dass der Innentopfboden axialen Abstand zur Stirnseite des Zapfens hat. Dadurch wird ein freier Federbereich bereitgestellt, in den der Topfboden zumindest im Kontaktbereich gegen die Stirnseite des Zapfens axial einfedern kann, wenn die Zapfen unter Vorspannung zwischen den Armen der Gelenkgabel eingesetzt sind. Der Abstand kann so bemessen werden, dass eine zur Erzeugung einer vorbestimmten Vorspannkraft ausreichende elastische Verformung der Innenbüchse erfolgen kann.

Eine vorteilhafte Ausführung der Erfindung sieht vor, dass der Außentopfboden plan ausgebildet ist. Der erfindungsgemäß an dem Zapfen, oder bevorzugt an der Innenbüchse ausgebildete Kontaktbereich stützt sich von innen um die Zapfenachse drehbar am Außentopfboden der topfförmigen Außenbüchse ab. Dadurch, dass der Außentopfboden zumindest auf seiner der Stirnseite des Zapfens zugewandten Innenseite im Kontaktbereich plan ist, wird eine definierte Kontakt- und Lagerfläche zur Verfügung gestellt. Der Außentopf mit dem planen Außentopfboden kann rationell mit der geforderten Steifigkeit hergestellt werden. Der plane Außentopfboden hat überwiegend eine axiale Stützfunktion, und wird auch durch die über die Kontaktbereiche eingeleitete Vorspannkraft nicht wesentlich verformt. Dies ist insofern vorteilhaft, dass sich zum einen die äußere Form durch die Vorspannkraft nicht verändert, und zum anderen mögliche äußere Einwirkungen keinen Einfluss auf die Vorspannkraft haben.

Der Kontaktbereich kann einen zentral stirnseitig vorstehenden Zentrierdorn aufweisen, der in eine Zentriervertiefung in der Außenbüchse eintaucht. Dadurch kann die koaxial zentrierte Lagerung des Zapfens oder der Innenbüchse relativ zur Außenbüchse bezüglich einer Rotation um die Zapfenachse sichergestellt sein.

Es kann vorgesehen sein, dass die Innenbüchse einen nach außen vorstehenden Flanschabschnitt aufweist. Der Flanschabschnitt kann kragenförmig umlaufend im Randbereich der hinteren Öffnung der Innenbüchse, in welche der Zapfen eintaucht, ausgebildet sein. Durch den Flanschabschnitt kann eine axiale Dichtfläche zur Verfügung gestellt werden, gegen die ein elastisches Dichtelement zur Abdichtung gegen die Außenbüchse dichtend anliegen kann.

Es ist weiterhin möglich, dass der Außentopf einen radial vorstehenden Haltevorsprung aufweist. Der Haltevorsprung kann bevorzugt im Randbereich der Öffnung des Außentopfes von der Außenhülse nach innen vorstehen, und die Wälzkörper umgreifen und halten. Weiterhin kann zwischen Dichtflächen an dem Haltevorsprung und an einem nach außen vorstehenden Flanschabschnitt der Innenbüchse ein Dichtelement, beispielsweise ein Dichtring angeordnet sein, zur Abdichtung des Lagerinnenraums, in dem sich die Wälzkörper befinden.

Bevorzugt können die Innenbüchse mit dem Zapfen und/oder die Außenbüchse mit dem Arm kraftschlüssig und/oder formschlüssig und/oder stoffschlüssig verbunden sein. Eine kraftschlüssige Verbindung kann durch Aufpressen der Innenbüchse auf den Zapfen oder Einpressen der Außenbüchse in eine Öffnung der Gabel erfolgen. Zur Erzeugung einer formschlüssigen Verbindung kann beispielsweise durch Verstemmen eine lokale plastische Verformung erzeugt werden, gegen die sich die Innen- oder Außenbüchse an dem Zapfen oder der Gabel abstützen. Eine stoffschlüssige Verbindung kann Verkleben, Verschweißen oder dergleichen umfassen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Lenksäule in einer schematischen perspektivischen Ansicht,
- Figur 2: ein Kreuzgelenk einer Lenksäule gemäß Figur 1 in einer schematischen perspektivischen Ansicht,
- Figur 3: einen Längsschnitt durch ein erfindungsgemäßes Zapfenlager eines Kreuzgelenks gemäß Figur 2 in einer ersten Ausführung,
- Figur 4: einen Längsschnitt durch ein erfindungsgemäßes Zapfenlager eines Kreuzgelenks gemäß Figur 2 in einer zweiten Ausführung,
- Figur 5: einen Längsschnitt durch ein erfindungsgemäßes Zapfenlager eines Kreuzgelenks gemäß Figur 2 in einer dritten Ausführung,
- Figur 6: einen Längsschnitt durch ein erfindungsgemäßes Zapfenlager eines Kreuzgelenks gemäß Figur 2 in einer vierten Ausführung,
- Figur 7: einen Längsschnitt durch ein erfindungsgemäßes Zapfenlager eines Kreuzgelenks gemäß Figur 2 in einer fünften Ausführung,
- Figur 8: eine teilweise auseinander gezogene Darstellung des Kreuzgelenks gemäß Figur 2 in der ersten Ausführungsform gemäß Figur 3,
- Figur 9: einen Längsschnitt durch ein erfindungsgemäßes Zapfenlager eines Kreuzgelenks gemäß Figur 2 in einer sechsten Ausführung,
- Figur 10: eine teilweise auseinander gezogene Darstellung des Kreuzgelenks gemäß Figur 7,
- Figur 11: eine teilweise auseinander gezogene Darstellung des Kreuzgelenks gemäß Figur 5.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

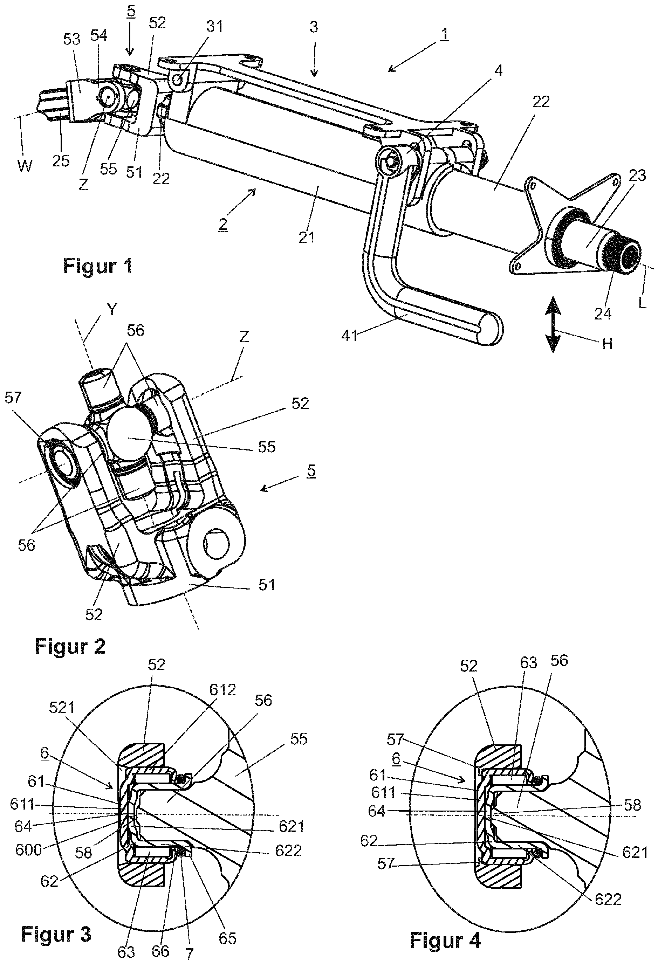

Figur 1 zeigt eine erfindungsgemäße Lenksäule 1 schematisch in perspektivischer Ansicht schräg von hinten (bezogen auf die Fahrtrichtung eines nicht dargestellten Kraftfahrzeugs).

Die Lenksäule 1 umfasst eine Stelleinheit 2, mit einer Manteleinheit 21, in dem ein Mantelrohr 22 aufgenommen ist. In der Manteleinheit 21 ist eine Lenkspindel 23 um eine Längsachse L drehbar gelagert. Die Lenkspindel 23 bildet einen hinteren bzw. oberen Teil der Lenkwelle und weist an ihrem hinteren Ende einen Anschlussabschnitt 24 für ein nicht dargestelltes Lenkrad auf.

Die Stelleinheit 2 ist in ihrem vorderen Bereich an einer Trageinheit 3, die an einer nicht dargestellten Karosserie eines Kraftfahrzeugs anbringbar ist, in einem Schwenklager 31 um eine horizontale Schwenkachse verschwenkbar gelagert, so dass die Lenkspindel 23 zur Höhenverstellung des Lenkrads im Bereich des Anschlussabschnitts 24 in einer Höhenrichtung H verschwenkbar ist.

Im hinteren Bereich der Stelleinheit 2 befindet sich mit Abstand zum Schwenklager 31 eine Spanneinrichtung 4, welche durch Betätigung eines Spannhebels 41 eine lösbare Verspannung der Stelleinheit 2 mit der Trageinheit 2 ermöglicht, um die eingestellte Höhenverstellung zu fixieren. Durch Lösen der Spanneinrichtung 4 ist es weiterhin möglich, zur Längsverstellung das Mantelrohr 22 teleskopartig relativ zur Manteleinheit 21 zu verstellen. Beim Fixieren der Spanneinrichtung 4 wird das Mantelrohr 22 ebenfalls lösbar in der Manteleinheit 21 verspannt, wodurch die Längseinstellung fixiert wird.

An ihrem vorderen, in Figur 1 nach links aus der Manteleinheit 21 heraus vorstehenden Ende ist die Lenkspindel 22 über ein Kreuzgelenk 5 gelenkig mit einer Zwischenwelle 52 gekuppelt, die um eine zur Längsachse L geneigte Wellenachse W drehbar ist.

Das Gelenk 5 weist eine erste Gelenkgabel 51 auf, welche fest mit der Lenkspindel 22 verbunden ist und zwei bezüglich der Längsachse L einander gegenüberliegende Arme 52 aufweist. Eine gleichartig aufgebaute Gelenkgabel 53 ist an der Zwischenwelle 25 angebracht, welche zwei bezüglich der Wellenachse W einander gegenüberliegende Arme 54 aufweist.

Die Gelenkgabeln 51 und 53 sind über ein Gelenkkreuz 55, auch als Zapfenkreuz bezeichnet, gelenkig miteinander verbunden.

In Figur 2 ist das Gelenk 5 vergrößert dargestellt, wobei zur besseren Übersicht nur die Gelenkgabel 51 eingezeichnet ist. Das Gelenkkreuz 55 weist zwei Paare von entgegengesetzt radial vorstehenden Zapfen 56, auch als Gelenkzapfen bezeichnet, auf, die auf rechtwinklig gekreuzten Zapfenachsen Z und Y angeordnet sind. Die beiden Zapfen 56 eines Paars sind jeweils in einem Zapfenlager 6 in einem Arm 52, 54 einer Gelenkgabel 51, 53 drehbar um ihre Zapfenachse Z bzw. Y gelagert, die sich quer zur Längsachse L bzw. zur Wellenachse W durch die Arme 52 bzw. 54 erstrecken.

Da die Erfindung sich auf die Ausbildung der Zapfenlager 6 bezieht, und die erste Anordnung in den Armen 52 der Gabel 51 im Wesentlichen identisch ist mit der zweiten Anordnung in den Armen 54 der Gelenkgabel 53, werden im Folgenden nur die Bezugszeichen der ersten Anordnung genannt, wobei sinngemäß die zweite Anordnung mit umfasst ist.

Figur 3 zeigt einen Schnitt längs der Zapfenachse Z durch das Gelenkkreuz 55. Darin ist erkennbar, dass der Zapfen 56 einstückig mit einem Grundkörper des Gelenkkreuzes 55 ausgebildet ist, das bevorzugt als Stahl-Kaltpressteil gefertigt ist.

Das Zapfenlager 6 weist eine als Außentopf 61 ausgebildete Außenbüchse auf, mit einem, im wesentlichen planen Außentopfboden 611, der eine zylindrische Außenhülse 612 stirnseitig verschließt. Die Außenhülse 612 ist fest mit dem Arm 52 verbunden, beispielsweise in eine Öffnung 521 eingepresst.

Eine als Innentopf 62 ausgebildete Innenbüchse weist eine rohrförmige Innenhülse 622 auf, die fest auf dem Zapfen 56 angebracht ist, beispielsweise aufgepresst ist, und die stirnseitig von einem Innentopfboden 621 verschlossen ist und andererseits im nicht vorgespannten Zustand durch einen Spalt 600 von der Stirnseite des Zapfens 56, über einen als Kontaktbereich dienenden Vorsprung 58 des Zapfens 56, axial beabstandet ist.

Das Zapfenlager 6 ist als Radialwälzlager ausgebildet, wobei als Wälzkörper 63 zylindrische Nadeln zwischen den auf der inneren Mantelfläche der Außenhülse 612 und der äußeren Mantelfläche der Innenhülse 622 ausgebildeten Wälzkörperlaufbahnen abrollbar angeordnet sind.

Der Innentopfboden 621 weist stirnseitig einen konvex vorstehenden Kontaktbereich 64 auf, welcher von innen gegen den Außentopfboden 611 anliegt. Der Kontaktbereich 64 ist im gezeigten Beispiel kegelstumpfförmige Kalotte ausgebildet, die durch den Innentopfboden 621 in Richtung der Zapfenachse Z axial federelastisch mit der Innenhülse 622 verbunden ist. Dadurch kann der Kontaktbereich 64 in Richtung der Zapfenachse Z axial elastisch gegen die durch den Innentopfboden 621 ausgeübte Federkraft gegen die Stirnseite des Zapfens 56 einfedern, wodurch der Zapfen 56 in Richtung der Zapfenachse Z elastisch gegen den Außentopfboden 611 verspannt werden kann.

In der Darstellung von Figur 3 drückt die von dem axial elastischen Innentopf 62 über den Kontaktbereich 64 ausgeübte Federkraft das Gelenkkreuz 55 nach rechts, sodass das Gelenkkreuz 55 mit seiner Stirnseite, insbesondere über den Vorsprung 58, mit dem Innentopfboden 621 in direktem Kontakt steht. Durch das spiegelbildlich dazu an dem anderen, gegenüberliegenden Zapfen 56 des Paars ausgebildete Zapfenlager wird entsprechend eine nach links gerichtete, gleich große Federkraft ausgeübt, so dass das Gelenkkreuz mit dieser Federkraft elastisch zwischen den Armen 52 der Gelenkgabel 51 verspannt ist.

Durch einen Elastomer-Dichtring 7, der axial zwischen einem kragenartig radial außen vorstehenden Flansch 65 an der Innenhülse 622 und einem von der Außenhülse 612 nach innen vorstehenden Haltevorsprung 66 ist der die Nadeln 63 aufnehmende Innenraum des Zapfenlagers 6 nach außen abgedichtet.

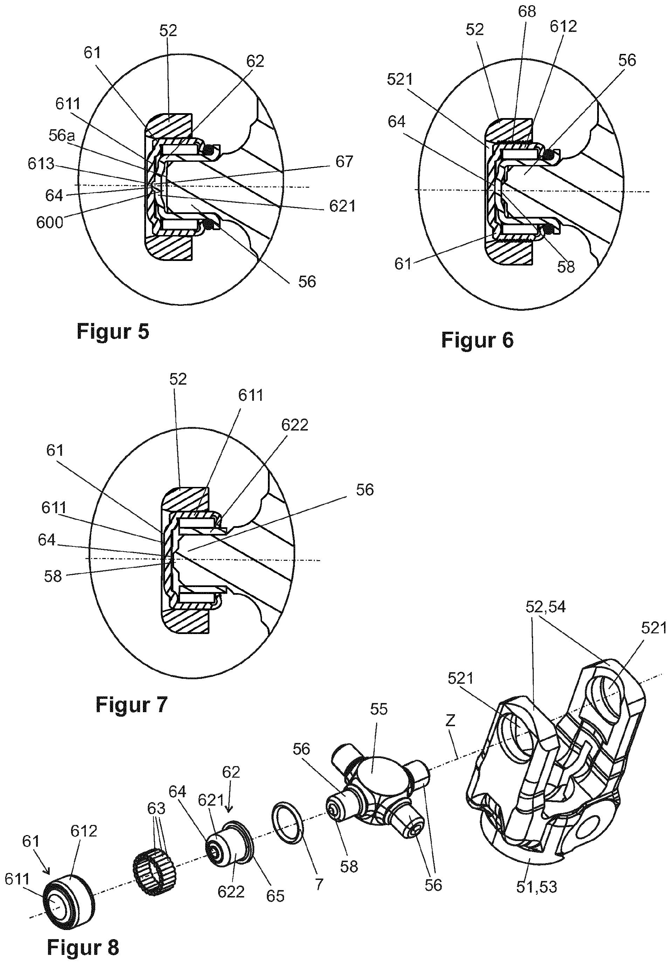

Figur 8 zeigt die einzelnen Bestandteile freigestellt in einer auseinander gezogenen Explosionsansicht.

Figur 4 zeigt eine Ausführung wie in Figur 3, bei welcher der Arm 52 der Verstemmungen 57 aufweist, welche plastische Verformungen zur formschlüssigen Fixierung des Außentopfes 61 in der Öffnung 521 bilden und zeigt anders als Figur 3 ein vorgespanntes Zapfenlager 6.

Die in Figur 5 gezeigte Ausführung entspricht im Grunde der Ausführung gemäß Figur 3 oder 4. Dabei weist der Innentopf 62 am Innentopfboden 621 im Bereich der Kontaktfläche zusätzlich einen zentralen, axial stirnseitig vorstehenden Zentrierdorn 67 auf, der um die Zapfenachse Z drehbar in einer korrespondierenden Vertiefung 613 gelagert ist. Die Stirnseite des Zapfens ist von dem Innentopfboden 621 über den Spalt 600 axial beabstandet. Der Zentrierdorn 67 wirkt als Kontaktbereich mit dem Aussentopfboden 611.

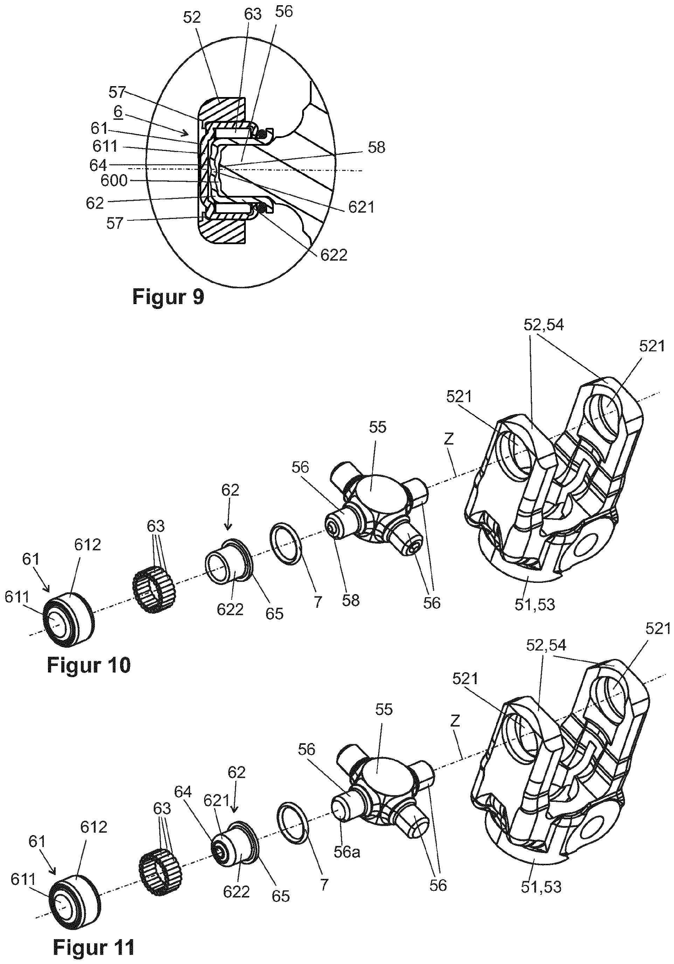

Figur 11 zeigt die einzelnen Bestandteile freigestellt in einer auseinander gezogenen Explosionsansicht. Dabei ist dargestellt, dass zumindest ein Zapfen 56 eine plane oder ebene Kontaktfläche 56a aufweist, auf welche die Innenbüchse 62 aufgepresst wird.

In Figur 6 ist eine mögliche Weiterbildung der in den Figuren 3, 4, oder 5 dargestellten Ausführungen gezeigt, bei der im Bereich der Verbindungsfläche zwischen dem Arm 52 und dem Außentopf 61 auf der Innenfläche der Öffnung 521 und/oder auf der Außenfläche des Außentopfes 61 Verbindungsmittel 68 angeordnet sind, beispielsweise Formschlusselemente wie Rändelungen, Aufrauhungen oder dergleichen.

In der alternativen Ausführung gemäß Figur 7 ist die Innenbüchse 62 als beidseitig offene Innenhülse 622 ausgebildet, die also stirnseitig keinen Innentopfboden hat. Dabei ist der konvex vorstehende Kontaktbereich 64 an einem zentral stirnseitig vorstehenden Vorsprung 58 des Zapfens 56 angeordnet. Der Vorsprung 58 ist einstückig an den Zapfen 56 angeformt und steht stirnseitig aus der Innenhülse 622 vor und liegt gegen den Außentopfboden 611 an. Der Außentopfboden 611 kann dabei in Richtung der Zapfenachse Z axial federelastisch ausgebildet sein.

Figur 10 zeigt die einzelnen Bestandteile freigestellt in einer auseinander gezogenen Explosionsansicht. Der Vorsprung 58 des Zapfens 56 dient als Zentrierung der Außenbüchse 61.

In Figur 9 ist eine mögliche Weiterbildung der in den Figuren 3, 4, oder 5 dargestellten Ausführungen gezeigt, wobei der Innentopfboden 621 einerseits über einen Spalt 600 axial zum Vorsprung 58 des Zapfens 56 beabstandet ist und andererseits an dem Außentopfboden 611 anliegt. Der Topfboden des Innentopfs 62 ist gewellt ausgebildet und liegt im Zustand der Vorspannung sowohl am Aussentopfboden 611 als auch am Vorsprung 58 des Zapfens an.

### Bezugszeichenliste

- 1: Lenksäule
- 2: Stelleinheit
- 21: Manteleinheit
- 22: Mantelrohr
- 23: Lenkspindel
- 24: Anschlussabschnitt
- 25: Zwischenwelle
- 3: Trageinheit
- 31: Schwenklager
- 4: Spanneinrichtung
- 41: Spannhebel
- 5: Kreuzgelenk
- 51, 53: Gelenkgabel
- 52, 54: Arm
- 521: Öffnung
- 55: Gelenkkreuz (Zapfenkreuz)
- 56: Zapfen (Gelenkzapfen)
- 57: Verstemmung
- 58: Vorsprung
- 6: Zapfenlager
- 61: Außentopf
- 611: Außentopfboden
- 612: Außenhülse
- 613: Vertiefung
- 62: Innentopf
- 621: Innentopfboden
- 622: Innenhülse
- 63: Wälzkörper
- 64: Kontaktbereich
- 65: Flansch
- 66: Haltevorsprung
- 67: Zentrierdorn
- 68: Verbindungsmittel
- 7: Dichtring

- L: Längsachse
- W: Wellenachse
- Z, Y: Zapfenachse

## Patentansprüche

1. Kreuzgelenk (5) für eine Lenkwelle (23, 25) eines Kraftfahrzeugs, umfassend ein Gelenkkreuz (55) mit zwei rechtwinklig zueinander angeordneten Paaren von Zapfen (56) und zwei mit der Lenkwelle (23, 25) verbindbaren Gelenkgabeln (51, 53) mit jeweils zwei einander gegenüberliegenden Armen (52, 54), in denen jeweils ein Zapfen (56) um eine Zapfenachse (Z) drehbar in einem Zapfenlager (6) gelagert ist, welches eine in dem Arm (52, 54) festgelegte, topfförmig ausgebildete Außenbüchse (61) aufweist, die stirnseitig von einem Außentopfboden (611) verschlossen ist, welcher der Stirnseite des Zapfens (56) gegenüberliegt,
wobei zwischen dem Zapfen (56) und der Außenbüchse (61) abrollbare Wälzkörper (63) angeordnet sind,
wobei auf dem Zapfen (56) eine Innenbüchse (62) festgelegt ist, wobei die Wälzkörper (63) zwischen der Innenbüchse (62) und der Außenbüchse (61) in einem als Wälzkörperlaufbahn ausgebildeten Bereich angeordnet sind, und wobei auf der Stirnseite eines Zapfens (56) ein konvex vorstehender Kontaktbereich (58, 64) angeordnet ist, der den Außentopfboden (611) kontaktiert,
**dadurch gekennzeichnet,**
**dass** der Kontaktbereich (58, 64) einstückig an den Zapfen (56) oder an der Innenbüchse (62) ausgebildet ist und relativ zur Wälzkörperlaufbahn der Innenbüchse (62) stirnseitig axial vorsteht.

2. Kreuzgelenk nach Anspruch 1, **dadurch gekennzeichnet, dass** die Innenbüchse (62) topfförmig als Innentopf (62) ausgebildet ist mit einem stirnseitigen Innentopfboden (621), der den Kontaktbereich (64) aufweist.

3. Kreuzgelenk nach Anspruch 2, **dadurch gekennzeichnet, dass** der Kontaktbereich (64) an dem Innentopf (62) axial federnd ausgebildet ist.

4. Kreuzgelenk nach einem der Ansprüche 2 bis 3, **dadurch gekennzeichnet, dass** der Kontaktbereich (64) gebildet wird durch eine an dem Innentopfboden (621) ausgebildete Kalotte.

5. Kreuzgelenk nach Anspruch 4, **dadurch gekennzeichnet, dass** der Innentopfboden (621) außerhalb des Kontaktbereichs (64) zu mindestens 50%, bevorzugt zu 75% bis 80% eben ausgebildet ist.

6. Kreuzgelenk nach einem der Ansprüche 4 oder 5, **dadurch gekennzeichnet, dass** der Innentopfboden (621) axialen Abstand zur Stirnseite des Zapfens (56) hat.

7. Kreuzgelenk nach einem der vorangehenden Ansprüche, **dadurch gekennzeichnet, dass** der Außentopfboden (611) plan ausgebildet ist.

8. Kreuzgelenk nach einem der vorangehenden Ansprüche, **dadurch gekennzeichnet, dass** die Innenbüchse (62) einen nach außen vorstehenden Flanschabschnitt (65) aufweist.

9. Kreuzgelenk nach einem der vorangehenden Ansprüche, **dadurch gekennzeichnet, dass** der Außentopf (61) einen radial vorstehenden Haltevorsprung (66) aufweist.

10. Kreuzgelenk nach einem der vorangehenden Ansprüche, **dadurch gekennzeichnet, dass** zwischen dem Außentopf (61) und der Innenbüchse (62) ein Dichtelement (7) angeordnet ist.

11. Kreuzgelenk nach einem der vorangehenden Ansprüche, **dadurch gekennzeichnet, dass** die Innenbüchse (62) mit dem Zapfen (56) und/oder die Außenbüchse (61) mit dem Arm (52, 54) kraftschlüssig und/oder formschlüssig und/oder stoffschlüssig verbunden ist.

## Claims

1. Universal joint (5) for a steering shaft (23, 25) of a motor vehicle, comprising a universal joint (55) with two pairs of journals (56) arranged at right angles to one another and two joint forks (51, 53) which can be connected to the steering shaft (23, 25) and each have two arms (52, 54) lying opposite one another, in each of which a journal (56) is mounted rotatably about a journal axis (Z) in a journal bearing (6) which has a cup-shaped outer bush (61) which is fixed in the arm (52, 54) and is closed at the end face by an outer cup base (611) which is opposite the end face of the journal (56), wherein rollable rolling elements (63) are arranged between the journal (56) and the outer bush (61),
wherein an inner bush (62) is fixed
on the journal (56), wherein the rolling elements (63) are arranged between the inner bush (62) and the outer bush (61) in a region formed as a rolling element track, and wherein a convexly projecting contact region (58, 64) is arranged on the end face of a journal (56), which contacts the outer cup base (611),
**characterised in**
**in that** the contact region (58, 64) is formed integrally on the journal (56) or on the inner bush (62) and projects axially on the end face relative to the rolling element track of the inner bush (62).

2. Universal joint according to claim 1, **characterised in that** the inner bush (62) is potshaped as an inner pot (62) with an end-face inner pot base (621) which has the contact area (64).

3. Universal joint according to claim 2, **characterised in that** the contact area (64) on the inner pot (62) is designed to be axially resilient.

4. Universal joint according to one of claims 2 to 3, **characterised in that** the contact region (64) is formed by a spherical cap formed on the inner cup base (621).

5. Universal joint according to claim 4, **characterised in that** the inner cup base (621) outside the contact area (64) is at least 50%, preferably 75% to 80%, flat.

6. Universal joint according to one of claims 4 or 5, **characterised in that** the inner cup base (621) is axially spaced from the end face of the journal (56).

7. Universal joint according to one of the preceding claims, **characterised in that** the outer cup base (611) is flat.

8. Universal joint according to one of the preceding claims, **characterised in that** the inner bush (62) has an outwardly projecting flange section (65).

9. Universal joint according to one of the preceding claims, **characterised in that** the outer pot (61) has a radially projecting retaining projection (66).

10. Universal joint according to one of the preceding claims, **characterised in that** a sealing element (7) is arranged between the outer pot (61) and the inner bush (62).

11. Universal joint according to one of the preceding claims, **characterised in that** the inner bush (62) is connected to the pin (56) and/or the outer bush (61) is connected to the arm (52, 54) in a force-fit and/or form-fit and/or material-fit manner.

## Revendications

1. Joint universel (5) pour un arbre de direction (23, 25) d'un véhicule automobile, comprenant un croisillon (55) avec deux paires de tourillons (56) disposées à angle droit l'une par rapport à l'autre et deux fourches articulées (51, 53) pouvant être reliées à l'arbre de direction (23, 25) avec respectivement deux bras (52, 54) opposés l'un à l'autre, dans chacun desquels un tourillon (56) est monté rotatif autour d'un axe de tourillon (Z) dans un palier de tourillon (6) qui présente une douille extérieure (61) en forme de pot fixée dans le bras (52, 54) et fermée frontalement par un fond de pot extérieur (611) qui est opposé à la face frontale du tourillon (56),
des corps de roulement (63) pouvant rouler étant disposés entre le tourillon (56) et la douille extérieure (61), une douille intérieure (62) étant fixée
sur le tourillon (56), les corps de roulement (63) étant disposés entre la douille intérieure (62) et la douille extérieure (61) dans une zone conçue comme une voie de roulement pour corps de roulement, et une zone de contact (58, 64) faisant saillie de manière convexe étant disposée sur la face frontale d'un tourillon (56), laquelle zone de contact est en contact avec le fond de pot extérieur (611),
**caractérisé en ce que**
**en ce que** la zone de contact (58, 64) est formée d'une seule pièce sur les tourillons (56) ou sur la douille intérieure (62) et fait saillie axialement du côté frontal par rapport à la piste de roulement du corps de roulement de la douille intérieure (62).

2. Joint universel selon la revendication 1, **caractérisé en ce que** la douille intérieure (62) est réalisée en forme de pot comme pot intérieur (62) avec un fond de pot intérieur (621) du côté frontal qui présente la zone de contact (64).

3. Joint universel selon la revendication 2, **caractérisé en ce que** la zone de contact (64) est élastique axialement sur le pot intérieur (62).

4. Joint universel selon l'une des revendications 2 à 3, **caractérisé en ce que** la zone de contact (64) est formée par une calotte formée sur le fond du pot intérieur (621).

5. Joint universel selon la revendication 4, **caractérisé en ce que** le fond du pot intérieur (621) est plat à au moins 50%, de préférence de 75% à 80%, en dehors de la zone de contact (64).

6. Joint universel selon l'une des revendications 4 ou 5, **caractérisé en ce que** le fond du pot intérieur (621) est espacé axialement de la face frontale du tourillon (56).

7. Joint universel selon l'une des revendications précédentes, **caractérisé en ce que** le fond du pot extérieur (611) est plan.

8. Joint universel selon l'une quelconque des revendications précédentes, **caractérisé en ce que** la douille intérieure (62) comporte une partie de bride (65) faisant saillie vers l'extérieur.

9. Joint universel selon l'une des revendications précédentes, **caractérisé en ce que** le pot extérieur (61) présente une saillie de retenue (66) faisant saillie radialement.

10. Joint universel selon l'une des revendications précédentes, **caractérisé en ce qu'**un élément d'étanchéité (7) est disposé entre le pot extérieur (61) et la douille intérieure (62).

11. Joint universel selon l'une des revendications précédentes, **caractérisé en ce que** la douille intérieure (62) est reliée au tourillon (56) et/ou la douille extérieure (61) est reliée au bras (52, 54) par adhérence et/ou par complémentarité de forme et/ou par liaison de matière.
